# EUROPEAN PATENT APPLICATION

(11) **EP 3 418 120 A1**
(43) Date of publication of application: **26.12.2018**
(21) Application number: 17176976.3
(22) Date of filing: 20.06.2017
(51) Int. Cl.: B60Q 1/34, B60Q 1/52, G01S 17/93

(54) **APPARATUS AND METHODS OF COLLISION AVOIDANCE**

(71) Applicant: Vestel Elektronik Sanayi ve Ticaret A.S., 45030 Manisa (TR)
(72) Inventor: ÖCAL, Ömür, 45030 Manisa (TR); KOCAMAN, Cihan, 45030 Manisa (TR)
(74) Representative: Flint, Adam

(57) **Abstract**

A method of collision avoidance comprising determining that an obstruction is detected in the path of a vehicle (1), determining that a collision is likely to occur between the vehicle and the detected obstruction (2), ascertaining a direction of movement of the vehicle to avoid the likely collision and a complementary direction of movement of the obstruction to avoid the same likely collision. The method of collision avoidance comprising outputting as a light signal (108) an indication of at least one of: the direction of movement of the vehicle (1) to avoid the likely collision, and the complementary direction of movement of the obstruction (2).

## Description

### Technical Field

The present disclosure relates to apparatus and methods for collision avoidance.

### Background

Traffic related collisions are a common occurrence on roads throughout the world. In many cases a collision may be the result of an unforeseen or unexpected obstruction in the road. In some cases these collisions can be classed as avoidable collisions. Human error, indecision, or hesitation can be a deciding factor in whether these avoidable collisions are indeed avoided.

### Summary

According to a first aspect disclosed herein, there is provided a method of collision avoidance comprising:
determining that an obstruction is detected in the path of a vehicle;
determining that a collision is likely to occur between the vehicle and the detected obstruction;
ascertaining a direction of movement of the vehicle to avoid the likely collision and a complementary direction of movement of the obstruction to avoid the same likely collision; and
outputting as a light signal an indication of at least one of:
   the direction of movement of the vehicle to avoid the likely collision; and
   the complementary direction of movement of the obstruction.

In an example, the source of the light signal is a headlight of the vehicle.

In an example, the source of the light signal comprises a plurality of LEDs.

In an example, the method comprises:
causing the vehicle to move in the ascertained direction of movement.

According to a second aspect disclosed herein, there is provided a method of collision avoidance comprising;
receiving a light signal at a photo detector of a vehicle from an obstruction, the received light signal comprising an instruction, the instruction instructing the vehicle to move in a direction;
decoding the light signal; and
causing the vehicle to move in the direction based on the received light signal.

In an example, the obstruction is another vehicle.

According to a third aspect disclosed herein, there is provided a controller for a vehicle, the controller comprising:
a processor constructed and arranged to:
   determine that an obstruction is detected in the path of a vehicle;
   determine that a collision is likely to occur between the vehicle and the detected obstruction;
   ascertain a direction of movement of the vehicle to avoid the likely collision and a complementary direction of movement of the obstruction to avoid the same likely collision; and
   cause a light signal to be output, the light signal being an indication of at least one of:
the direction of movement of the vehicle to avoid the likely collision; and
the complementary direction of movement of the obstruction.

In an example, the processor is configured to:
decode a light signal that is received via a photo detector of the vehicle to obtain an instruction from the light signal that instructs the vehicle to move in a direction; and
cause the vehicle to move in the direction based on the received light signal.

According to a fourth aspect disclosed herein, there is provided a controller for a vehicle, the controller comprising:
a processor constructed and arranged to:
   decode a light signal that is received via a photo detector of the vehicle to obtain an instruction from the light signal that instructs the vehicle to move in a direction; and
   cause the vehicle to move in the direction based on the received light signal.

There may be provided a vehicle comprising a controller as described above.

### Brief Description of the Drawings

To assist understanding of the present disclosure and to show how embodiments may be put into effect, reference is made by way of example to the accompanying drawings in which:
Figure 1 shows schematically an example of a collision situation between two vehicles travelling in opposite directions;
Figure 2 shows schematically an example of an avoided collision situation between two vehicles travelling in opposite directions; and
Figure 3 shows schematically an example of apparatus for collision avoidance.

### Detailed Description

There are many occurrences on roads from which a collision situation may arise. The vast majority of such situations are the result of an obstruction in the road.

In many cases the obstruction is another vehicle. However, in some cases the obstruction may be a stationary obstruction. For example, the stationary obstruction may be a barricade or another vehicle that was involved in a previous collision.

Confronted with any of the above described collision situations, evasive action may be required in order to avoid the collision. Where the collision situation exists between two vehicles, it may be difficult to determine a direction in which to move each vehicle to avoid the collision, especially when relying on the judgement of the respective drivers of the vehicles alone. This is because both drivers may decide to change direction such that the collision still occurs. That is to say, both drivers may react to avoid the collision, only to steer into each other as a result of their respective choice of evasive action.

In accordance with examples described herein, it such a collision may be avoided by the use of light signals. These light signals may be emitted by a light source such that directions for any evasive action can be communicated between vehicles and/or any other obstructions.

Depending on the situation it may be necessary to emit light signals indicating either one of, or both of, the direction in which a vehicle will move, and the direction of movement of the obstruction, such that a collision is avoided. That is to say, a vehicle may output a light signal informing the receiving vehicle of the direction it intends to move in as well as a direction of movement for the receiving vehicle.

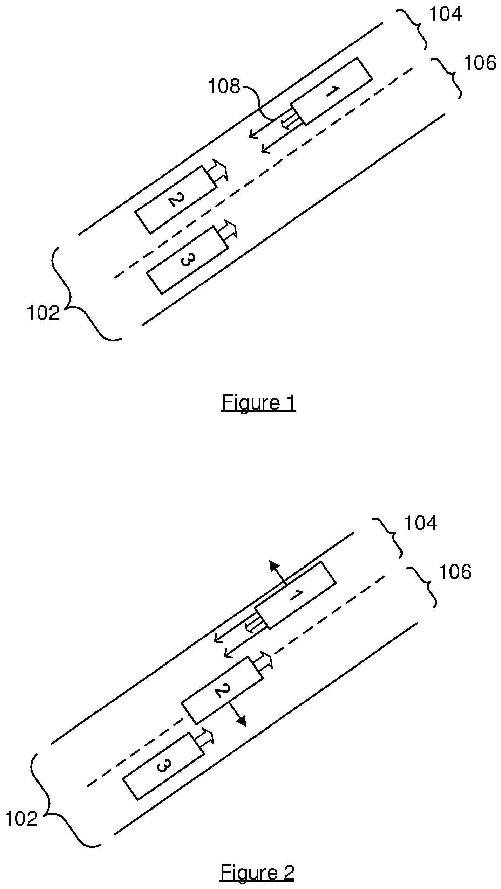

Referring to Figure 1, there is shown schematically an example of a likely collision situation. The term "likely collision" is used herein to describe a situation such that if no evasive action were to be taken a collision would occur or at least is likely to occur. Figure 1 shows three vehicles 1, 2, and 3. Vehicle 1 and vehicle 3 are both travelling in opposing directions along a road 102 comprising two single lanes, lane 104 and lane 106. Both vehicle 1 and vehicle 3 drive in the right-hand lane in their respective directions such that they will safely pass each other. That is to say, vehicle 1 in lane 104 will pass on the left side of vehicle 3 in lane 106, and vehicle 3 in lane 106 will pass on the left side of vehicle 1 in lane 104.

Vehicle 2 also travels along lane 104, the same lane of road vehicle 1 is travelling alone. However, vehicle 2 is travelling in the opposite direction to vehicle 1. Vehicle 2 is also positioned in front of vehicle 1. Such a situation may occur if for example vehicle 2 has moved into lane 104 in order to overtake vehicle 3 in lane 106, but the driver of vehicle 2 has not seen vehicle 1 or has misjudged the distance to vehicle 1. As a result of this vehicle 1 and vehicle 2 are likely to collide with one another.

With reference to the presently described example, vehicle 1 determines that there is an obstruction in its path. The obstruction in this example is vehicle 2. There are many methods by which this determination can be made. For example, time of flight measurements of a beam of light emitted by vehicle 1 and reflected back to and detected by vehicle 1 can be used to measure the distance between vehicle 1 and an object along its path of travel. Such methods may also be used to determine if the obstruction is moving, in which direction the obstruction is moving, and whether the path of the obstruction intersects with the path of the vehicle. If these determinations indicate that the path of the vehicle and the obstruction will intersect, and the obstruction and the vehicle will occupy the point of intersection at the same point in time, then a determination can be made that a collision is likely to occur. Image recognition may alternatively or additionally be used to determine the presence of an obstruction. Image recognition may also be used to determine the likelihood of a collision occurring between the vehicle and the detected obstruction.

Based on the above described determinations, a direction of movement of the vehicle 1 that would result in the likely collision being avoided can be ascertained. That is to say, given information about the trajectory of the vehicle 1 and the obstruction (vehicle 2), an altered trajectory may be ascertained whereby vehicle 1 and the obstruction (vehicle 2) do not collide. The direction in which vehicle 1 should move to achieve this altered trajectory can also be ascertained.

With reference to Figure 1, it can be seen that it may be determined that a direction of movement of vehicle 1 to avoid the likely collision is turning to the right (as viewed by the driver of vehicle 1, i.e. in the direction of travel of vehicle 1). The determination that the vehicle 1 should turn to the right to avoid the collision in this example may be for example a default position, particularly in those countries that drive on the right side of the road. In countries that drive on the left side of the road, the default determination may be that the vehicle 1 should turn to the left to avoid the collision. Other factors may be used in the determination, optionally to override such a default if a default direction of turning is specified. For example, a more sophisticated scheme may detect the presence of other obstructions in the neighbourhood of vehicle 1, such as the presence of other vehicles in adjacent lanes of a multi-lane road, the side of the road such as a rising bank of earth or crash barriers, etc.

In the light of a determination that vehicle 1 should turn to avoid the collision, it then becomes important or is at least desirable that vehicle 2 turns in a complementary direction. More specifically, in the case that it has been determined that vehicle 1 should turn to its right, if vehicle 2 should turn to its left, away from lane 106, vehicle 1 and vehicle 2 would still collide. In order to avoid this, in this example it is determined in which direction the obstruction (vehicle 2) should move to avoid the likely collision. In this specific example, this direction is also to the right (as viewed by the driver of vehicle 2), which is complementary to the direction of movement of the vehicle 1.

In this example, these determinations are made by a controller or the like which is associated with at least one of the vehicles, which in this specific example is vehicle 1. An example controller is discussed below.

Once the direction of movement of the vehicle 1 and the direction of movement of the obstruction (vehicle 2) have been ascertained such that the likely collision can be avoided, an indication of at least one and optionally both of the complementary direction of movement of the obstruction (vehicle 2) and the direction of movement of the vehicle (vehicle 1) is communicated to the obstruction (vehicle 2).

In particular, in an example a light signal 108 comprising an indication of the determined direction of movement of the vehicle 1 to avoid the likely collision is output by vehicle 1. In this way the vehicle 1 can communicate to the obstruction (vehicle 2) via the light signal 108 the direction in which vehicle 1 intends to move. This allows the obstruction (vehicle 2) to determine the complementary direction itself, and to move accordingly. In another example, the vehicle 1 may also output an indication of the direction in which the obstruction (vehicle 2) should move to avoid the collision. In this way it is not required that the obstruction (vehicle 2) determines its direction of movement for itself. In examples, the vehicle 1 may output a light signal 108 that indicates both ascertained directions. Therefore the necessary information is communicated regardless of the capabilities of the obstruction with regard to determining the complementary direction itself.

In an example, the light signal 108 is output by a light source on the vehicle 1. This may be for example a dedicated light source for providing such light signals. In other examples, the light source may be one or more headlights 110 of the vehicle 1. In general, any other lights typically on a vehicle, such as side lights, fog lights, emergency lights, turn lights, etc. could be used to provide the light signal with the same result being achieved. In examples, the light source may comprise one or more light emitting diodes (LEDs).

The light signal may be encoded to include an indication of the one or both directions by for example modulation of the light beam, including for example frequency, amplitude and/or phase modulation.

In an example, vehicle 1 may not be capable of moving. For instance vehicle 1 may have been involved in a prior collision, and as a result may itself be an obstruction to another vehicle, similar to in Figure 1. Thus outputting the direction of movement of the obstruction (vehicle 2) is the only indication of direction of movement that is sensibly available to be output in the light signal 108. In this situation the path of the vehicle 1 in which the obstruction (vehicle 2) is determined to be present can be based on the direction in which the vehicle 1 was moving prior to becoming stationary. In examples, the determination of a likely collision can be performed in any direction in which an obstruction may be detected. For example, if another vehicle is on a collision course with the vehicle 1 from the left of the vehicle 1, appropriate sensors on the left side of the vehicle 1 for detecting an obstruction can be used to determine a likely collision. Subsequently, side or signal lights of vehicle 1 may be used to output a light signal 108 indicating the necessary direction of movement for the oncoming vehicle.

In an example, the vehicle 1 is subsequently caused to move in the ascertained direction of movement. That is to say, the vehicle 1 is itself caused to move such that the likely collision is avoided. This movement can be an automatic movement carried out automatically by vehicle 1 in response to the determination of the direction of movement, for example under control of a controller of vehicle 1. This has the advantage of removing any element of human error, delayed reaction, or inability of the driver to comply with the indicated direction of movement through illness or incapacity of the driver. Alternatively or additionally, the movement may be controlled manually by the driver of vehicle 1, for example in response to an indicator being provided on some display device within or associated with vehicle 1.

Referring to Figure 2, there is shown an example of an avoided collision situation between two vehicles travelling in opposite directions on a road. As described above with reference to Figure 1, in this example vehicle 1 outputs a light signal indicating at least one of the direction of movement of the vehicle 1 and the complementary direction of movement of the obstruction (e.g. vehicle 2) such that a likely collision can be avoided. In Figure 2, vehicle 2 receives the light signal output by vehicle 1. The light signal 108 is received at vehicle 2 at a light detector of vehicle 2. In Figure 2 the light signal is received from vehicle 1. However, the light signal may be received from some other obstruction.

In an example, the obstruction may be a moving vehicle (e.g. vehicle 1), a stationary vehicle, or some other obstruction such as a blockade, barrier, etc.

The received light signal comprises an instruction instructing the vehicle 2 to move in a direction. The obstruction (e.g. vehicle 1) outputting the light signal 108 thus transmits an instruction to the vehicle 2 to move in a direction such that a likely collision can be avoided. Vehicle 2 decodes the received light signal. By decoding the light signal 108, vehicle 2 obtains the instruction comprised therein. The vehicle 2 is subsequently caused to move in the direction based on the received light signal. Thus there is provided the reciprocal receiver for the above described transmitter in a collision avoidance system using on or more light signals. Again, similarly to the example described above, the movement may be carried out automatically by vehicle 2 under control of a controller of vehicle 2 and/or manually by the driver of vehicle 2 for example in response to an indicator being provided on some display device within or associated with vehicle 2.

As can be seen from Figure 2, in this example outputting the light signal from vehicle 1, and receiving the light signal at vehicle 2, causes each vehicle to move in the respective direction (in the example illustrated to the right), such that the vehicles pass each other and avoid the determined likely collision.

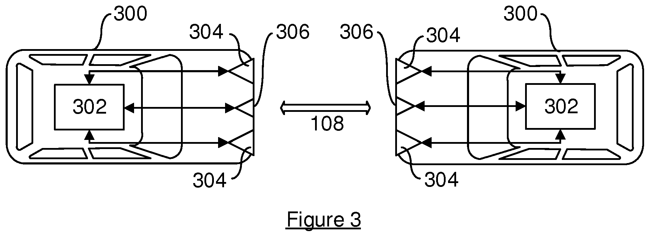

Referring to Figure 3, there is shown schematically an example of two vehicles 300 each having a controller 302. The controller 302 is connected to a light source 304 and a light detector 306. The controller 302 may for example be connected to an electronic control unit of the vehicle 1, or the functionality of the controller 302 may be incorporated into a standard electronic control unit which is modified to carry out the method described herein. The light source 304 emits the light signal 108. As mentioned, the light source 304 may be a dedicated light source for providing such light signals. In other examples, the light source may be one or more headlights of the vehicle 1.

Controller 302 comprises processing circuitry implementing the herein described method of collision avoidance.

When carrying out actions as the transmitting side, the controller 302 receives data indicating the proximity of one or more obstructions, the speed of one or more obstructions, the speed of the vehicle 1, etc. That is to say, the controller 302 receives any raw data required to establish whether an obstruction exists in the path of the vehicle. Similarly the controller 302 receives any raw data required to establish whether there is likely to be a collision.

The controller 302 then uses said determinations to ascertain directions of movement for both the vehicle 1 and the detected obstruction (e.g. vehicle 2) such that the likely collision can be avoided. The controller 302 then causes the light source to output a light signal 108 which includes an indication of at least one of the ascertained direction of movement of the transmitting vehicle and the movement of the receiving vehicle.

When carrying out actions as the receiving side, the light signal 108 is received at a light detector 306 of the receiving vehicle 300. The light detector 306 can be any light detector 306 capable of detecting the light signal 108 emitted by the transmitting vehicle 300. For example, the light detector may be a photodiode, a light meter, an optical camera, a light dependent resistor, etc.

Once the light signal 108 is received at the controller 302 the light signal can be decoded such that the instruction comprised therein can be implemented. In this example, the instruction instructs the receiving vehicle 300 to move in a direction. The instructed direction of movement of the vehicle 300 is such that a collision can be avoided. The controller 302 causes the receiving vehicle 300 to move in the direction based on the received light signal 108. That is to say the receiving vehicle 300, in response to receiving instruction at the controller 302, is caused to move in a direction. The direction is such that a determined likely collision may be avoided.

The received instructions may be executed automatically such that the vehicle responds to the instruction in an automated way. That is to say, the instructions received are implemented in a way that does not require input from a driver of the vehicle.

In an example, the transmitting of a light signal 108 is performed by a stationary obstruction and received by a vehicle 300. In this example, the stationary obstruction may output a light signal 108 which further comprises information about the detected obstruction's status. For example, the status may inform the receiver that the obstruction emitting the light signal is unable to move. On receipt of such additional information, vehicle 300 may automatically respond by increasing the amplitude of the instructed direction of movement. I.e. in recognition that no complementary movement can be expected to be carried out by the stationary obstruction. The collision avoidance method may thus consider the additional information such that the collision is still avoided.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of collision avoidance comprising:
determining that an obstruction is detected in the path of a vehicle;
determining that a collision is likely to occur between the vehicle and the detected obstruction;
ascertaining a direction of movement of the vehicle to avoid the likely collision and a complementary direction of movement of the obstruction to avoid the same likely collision; and
outputting as a light signal an indication of at least one of:
the direction of movement of the vehicle to avoid the likely collision; and
the complementary direction of movement of the obstruction.

2. A method according to claim 1, wherein the source of the light signal is a headlight of the vehicle.

3. A method according to claim 1 or claim 2, wherein the source of the light signal comprises a plurality of LEDs.

4. A method according to any of claims 1 to 3, wherein the method comprises:
causing the vehicle to move in the ascertained direction of movement.

5. A method of collision avoidance comprising;
receiving a light signal at a photo detector of a vehicle from an obstruction, the received light signal comprising an instruction, the instruction instructing the vehicle to move in a direction;
decoding the light signal; and
causing the vehicle to move in the direction based on the received light signal.

6. A method according to any of claims 1 to 5, wherein the obstruction is another vehicle.

7. A controller for a vehicle, the controller comprising:
a processor constructed and arranged to:
determine that an obstruction is detected in the path of a vehicle;
determine that a collision is likely to occur between the vehicle and the detected obstruction;
ascertain a direction of movement of the vehicle to avoid the likely collision and a complementary direction of movement of the obstruction to avoid the same likely collision; and
cause a light signal to be output, the light signal being an indication of at least one of:
the direction of movement of the vehicle to avoid the likely collision; and
the complementary direction of movement of the obstruction.

8. A controller according to claim 7, wherein the processor is configured to:
decode a light signal that is received via a photo detector of the vehicle to obtain an instruction from the light signal that instructs the vehicle to move in a direction; and
cause the vehicle to move in the direction based on the received light signal.

9. A controller for a vehicle, the controller comprising:
a processor constructed and arranged to:
decode a light signal that is received via a photo detector of the vehicle to obtain an instruction from the light signal that instructs the vehicle to move in a direction; and
cause the vehicle to move in the direction based on the received light signal.

10. A vehicle comprising a controller according to any of claims 7 to 9.
